(19) Europäisches Patentamt
European Patent Office
Office européen des brevets

(11) **EP 2 475 734 B1**

(12) **FASCICULE DE BREVET EUROPEEN**

(45) Date de publication et mention
de la délivrance du brevet:
**07.04.2021 Bulletin 2021/14**

(21) Numéro de dépôt: **10762989.1**

(22) Date de dépôt: **17.08.2010**

(51) Int Cl.:
**C09K 5/04** *(2006.01)* **F25B 9/00** *(2006.01)*

(86) Numéro de dépôt international:
**PCT/FR2010/051724**

(87) Numéro de publication internationale:
**WO 2011/030026 (17.03.2011 Gazette 2011/11)**

(54) **FLUIDE REFRIGERANT BINAIRE**

BINÄRE KÜHLFLÜSSIGKEIT

BINARY REFRIGERATING FLUID

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **11.09.2009 FR 0956240**

(43) Date de publication de la demande:
**18.07.2012 Bulletin 2012/29**

(73) Titulaire: **Arkema France
92700 Colombes (FR)**

(72) Inventeur: **RACHED, Wissam
F-69630 Chaponost (FR)**

(74) Mandataire: **Arkema Patent
Arkema France
DRD-DPI
420, rue d'Estienne d'Orves
92705 Colombes Cedex (FR)**

(56) Documents cités:
**EP-A1- 2 246 649          EP-A2- 2 149 592
WO-A1-2009/110228          WO-A1-2010/002016
WO-A2-2008/140809          FR-A1- 2 256 381
FR-A3- 2 182 956          US-A1- 2006 243 944
US-A1- 2008 314 073          US-A1- 2009 120 619**

**Description**

La présente invention concerne des compositions binaire du 2,3,3,3-tetrafluoropropène et du difluorométhane et leurs utilisations comme fluides de transfert de chaleur.

Les problèmes posés par les substances appauvrissant la couche d'ozone atmosphérique (ODP : ozone depletion potential) ont été traités à Montréal où a été signé le protocole imposant une réduction de la production et de l'utilisation des chlorofluorocarbures (CFC). Ce protocole a fait l'objet d'amendements qui ont imposé l'abandon des CFC et étendu la réglementation à d'autres produits, dont les hydrochlorofluorocarbones (HCFC).

L'industrie de la réfrigération et de la production d'air conditionné a beaucoup investi dans la substitution de ces fluides frigorigènes et c'est ainsi que les hydrofluorocarbures (HFC) ont été commercialisés.

Dans l'industrie automobile, les systèmes de climatisation des véhicules commercialisés dans de nombreux pays sont passés d'un fluide frigorigène au chlorofluorocarbure (CFC-12) à celui de l'hydrofluorocarbure (1,1,1,2 tetrafluoroéthane : HFC-134a), moins nocif pour la couche d'ozone. Cependant, au regard des objectifs fixés par le protocole de Kyoto, le HFC-134a (GWP = 1300) est considéré comme ayant un pouvoir de réchauffement élevé. La contribution à l'effet de serre d'un fluide est quantifiée par un critère, le GWP (Global Warming Potentials) qui résume le pouvoir de réchauffement en prenant une valeur de référence de 1 pour le dioxyde de carbone.

Le dioxyde de carbone étant non-toxique, ininflammable et ayant un très faible GWP, a été proposé comme fluide frigorigène pour les systèmes de climatisation en remplacement du HFC-134a. Toutefois, l'emploi du dioxyde de carbone présente plusieurs inconvénients, notamment liés à la pression très élevée de sa mise en œuvre en tant que fluide frigorigène dans les appareils et technologies existants.

Par ailleurs, le mélange R-404A constitué de 44 % en poids de pentafluoroéthane, 52 % en poids de trifluoroéthane et 4 % en poids de HFC-134a est largement utilisé comme fluide de réfrigération de grandes surfaces (supermarché) et dans les transports frigorifiques. Ce mélange a toutefois un GWP de 3900.

Le document JP 4 110 388 décrit l'utilisation des hydrofluoropropènes de formule $C_3H_mF_n$, avec m, n représentant un nombre entier compris entre 1 et 5 inclus et m + n = 6, comme fluides de transfert de chaleur, en particulier le tetrafluoropropène et le trifluoropropène.

Le document WO2004/037913 divulgue l'utilisation des compositions comprenant au moins un fluoroalcène ayant trois ou quatre atomes de carbone, notamment le pentafluoropropène et le tetrafluoropropène, de préférence ayant un GWP au plus de 150, comme fluides de transfert de chaleur.

Le document WO 2006/094303 divulgue une composition azéotropique contenant 7,4 % en poids du 2,3,3,3 tetrafluoropropène (HFO-1234yf) et 92,6 % en poids du difluorométhane (HFC-32). Ce document divulgue également des compositions quasi-azéotropiques contenant de 1 à 57 % en poids du 2,3,3,3 tetrafluoropropène et de 43 à 99 % en poids du difluorométhane.

Le document US2008/314073 décrit un système de transfert de chaleur comprenant un compresseur, un condenseur, un détendeur et un évaporateur et un dispositif à l'intérieur de la boucle fermée pour mesurer la pression interne du système. Il divulgue en outre, une méthode de détection de fuite des compositions de transfert de chaleur incluant, par exemple, des fluorooléfines dans un système de transfert de chaleur à boucle fermée.

Le document FR2182956 divulgue un échangeur de chaleur à contre-courant croisé comprenant un tube central muni à chacune de ses extrémités d'une bride et plusieurs tubes du plus faible diamètre enroulés sous forme hélicoïdale sur le tube central et qui se terminent dans des ouvertures d'entrée ou de passage des brides.

Le document FR2256381 divulgue un dispositif de transmission de chaleur comportant un compresseur, un condenseur et un évaporateur branchés en circuit fermé dans lequel circule un fluide de transfert de chaleur. Ce document décrit que le dispositif comprend en outre un échangeur de chaleur et une soupape d'étranglement disposés en série dans la partie du circuit situé entre le condenseur et l'évaporateur.

Le document WO2010/002016 divulgue une composition de transfert thermique contenant 10 à 26% en poids de difluorométhane et 74 à 90% en poids du 2,3,3,3-tétrafluoropropène.

Le document WO2009/110228 concerne un dispositif comprenant des compositions de 70-94% en poids d'un réfrigérant représenté par la formule $C_3H_mF_n$ (avec m et n étant un nombre entier allant de 1 à 5 et m+n=6).

Le document EP 2149592 décrit une composition comprenant du difluorométhane et des fluorooléfines.

Un échangeur de chaleur est un dispositif permettant de transférer de l'énergie thermique d'un fluide vers un autre, sans les mélanger. Le flux thermique traverse la surface d'échange qui sépare les fluides. La plupart du temps on utilise cette méthode pour refroidir ou réchauffer un liquide ou un gaz qu'il est impossible de refroidir ou chauffer directement.

Dans les systèmes à compression, l'échange thermique entre le fluide frigorigène et les sources de chaleur s'effectue par l'intermédiaire des fluides caloporteurs. Ces fluides caloporteurs sont à l'état gazeux (l'air dans l'air conditionné et la réfrigération à détente directe), liquide (l'eau dans les pompes à chaleur domestique, l'eau glycolée) ou diphasique.

Il existe différents modes de transfert :

- les deux fluides sont disposés parallèlement et vont dans le même sens : mode à co-courant (antiméthodique);
- les deux fluides sont disposés parallèlement mais vont dans le sens opposé: mode à contre-courant (méthodique);
- les deux fluides sont positionnés perpendiculairement : mode à courant croisé. Le courant croisé peut être à tendance co-courant ou contre-courant ;
- un des deux fluides fait un demi-tour dans un conduit plus large, que le deuxième fluide traverse. Cette configuration est comparable à un échangeur à co-courant sur la moitié de la longueur, et pour l'autre moitié à un échangeur à contre courant : mode à tête d'épingle .

La demanderesse a maintenant découvert que des compositions binaires du 2,3,3,3-tetrafluoropropène et du difluorométhane sont particulièrement intéressantes comme fluide de transfert de chaleur dans des systèmes de réfrigération à compression avec des échangeurs opérant en mode contre-courant ou en mode courant croisé à tendance contre-courant.

Ainsi, ces compositions peuvent être utilisées comme fluide de transfert de chaleur dans les pompes à chaleur, éventuellement réversible, jusqu'à une température de chauffage de 95°C, dans l'air conditionné, air conditionné industriel (papier, salle des serveurs), dans la climatisation domestique mobile, dans la réfrigération et congélation domestique, mettant en œuvre des systèmes à compression avec des échangeurs en mode contre-courant ou en mode courant croisé à tendance contre-courant.

Ainsi, un premier objet de la présente invention concerne l'utilisation des compositions binaires du 2,3,3,3-tetrafluoropropène et du difluorométhane comme fluide de transfert de chaleur dans les systèmes de réfrigération à compression avec des échangeurs en mode contre-courant ou en mode courant croisé à tendance contre-courant.

De préférence, les compositions binaires du 2,3,3,3 tetrafluoropropène et du difluorométhane sont utilisées comme fluide de transfert de chaleur pour l'air conditionné et pompe à chaleur, avec des échangeurs en mode contre-courant ou en mode courant croisé à tendance contre-courant.

Les compositions binaires du 2,3,3,3-tetrafluoropropène et du difluorométhane sont de préférence zéotropiques et contiennent essentiellement de 70 à 90 % en poids du 2,3,3,3-tetrafluoropropène et de 10 à 30 % en poids du difluorométhane.

De préférence, les compositions zéotropiques contiennent essentiellement de 78 à 84 % en poids du 2,3,3,3-tetrafluoropropène et de 16 à 22 % en poids du difluorométhane.

Les compositions zéotropiques avantageusement préférées contiennent essentiellement de 81 à 83 % en poids du 2,3,3,3 tetrafluoropropène et de 17 à 19 % en poids du difluorométhane.

Les compositions binaires utilisées dans la présente invention ont à la fois un ODP nul et un faible GWP. Leur température critique élevée (> 90°C) permet leur utilisation dans des conditions extrêmes, à savoir températures ambiantes très élevées ou pour produire de la chaleur à haute température (dans les pompes à chaleur). Le coefficient de performance (COP: le rapport entre la puissance thermique et la consommation électrique d'une pompe à chaleur ou d'un climatiseur) de ces compositions binaires dans des échangeurs en mode à contre-courant, est plus élevée que les compositions réfrigérantes actuelles. Compte-tenu du niveau de pression au condenseur et des taux de compression, il n'est pas nécessaire de développer de nouveaux compresseurs ; les compresseurs existant sur le marché peuvent convenir.

Les compositions binaires utilisées dans la présente invention peuvent remplacer le R-404A et R-407C (mélange ternaire contenant 52 % en poids du HFC-134a, 25 % en poids du pentafluoroethane et 23 % en poids de difluoromethane) dans des systèmes de transfert de chaleur à compression avec des échangeurs opérant en mode contre-courant ou en mode courant croisé à tendance contre-courant.

En outre, les compositions binaires zéotropiques peuvent être utilisées dans les systèmes à compression munis d'un dispositif de variation de composition par distillation contrôlée. De tel dispositif permet d'améliorer le rendement et réduire les pertes au démarrage et à l'arrêt du compresseur.

Les compositions binaires mises en oeuvre selon la présente invention peuvent être stabilisées. La quantité de stabilisant représente de préférence au plus 5 % en poids par rapport à la composition binaire.

Comme stabilisants, on peut citer notamment le nitromethane, l'acide ascorbique, l'acide terephtalique, les azoles tels que le tolutriazole ou le benzotriazole, les composés phénoliques tels que le tocopherol, l'hydroquinone, le t-butyl hydroquinone, le 2,6-di-ter-butyl-4-methylphenol, les epoxydes (alkyl éventuellement fluoré ou perfluoré ou alkenyl ou aromatique) tels que les n-butyl glycidyl ether, hexanediol diglycidyl ether, allyl glycidyl ether, butylphenylglycidyl ether, les phosphites, les phosphates, les phosphonates, les thiols et lactones.

Un deuxième objet de la présente invention concerne un procédé de transfert de chaleur dans lequel on utilise les compositions binaires du 2,3,3,3 tetrafluoropropène et du difluorométhane, telles que définies ci-dessus, comme fluide frigorigène dans des systèmes à compression utilisant des échangeurs en mode contre-courant ou en mode courant croisé à tendance contre-courant.

Le procédé selon la présente invention peut être mis en œuvre en présence des lubrifiants tels que l'huile minérale, alkylbenzène, le polyalkylène glycol, polyol ester et le polyvinyl éther.

Il est décrit une composition binaire contenant essentiellement 78 à 84 % en poids du 2,3,3,3- tetrafluoropropène et de 16 à 22% en poids du difluorométhane.

Il est décrit que une composition binaire contenant essentiellement de 81 à 83 % en poids du 2,3,3,3-tetrafluoropropène et de 17 à 19 % en poids du difluorométhane.

Il est décrit que les compositions binaires peuvent être stabilisées. La quantité de stabilisant peut représenter au plus 5 % en poids par rapport à la composition binaire.

Le stabilisant peut être choisi parmi ceux précités.

Il est décrit que la composition peut être utilisée comme fluide de transfert de chaleur.

Il est décrit une composition comprenant la composition binaire selon le troisième objet, éventuellement stabilisée, et au moins un lubrifiant. Le lubrifiant peut être choisi parmi l'huile minérale, l'alkylbenzène, le polyalkylène glycol, le polyol ester et le polyvinyl éther.

PARTIE EXPERIMENTALE

**Outils de calcul**

L'équation RK-Soave est utilisée pour le calcul des densités, enthalpies, entropies et les données d'équilibre liquide vapeur des mélanges. L'utilisation de cette équation nécessite la connaissance des propriétés des corps purs utilisés dans les mélanges en question et aussi les coefficients d'interaction pour chaque binaire.

Les données nécessaires pour chaque corps pur sont:
Température d'ébullition, Température et pression critique, la courbe de pression en fonction de la température à partir du point d'ébullition jusqu'au point critique, les densités liquide saturée et vapeur saturé en fonction de la température.

*HFC-32:*

Les données sur HFC-32 sont publiées dans l'ASHRAE Handbook 2005 chapitre 20 et sont aussi disponible sous Refrop (Logiciel développé par NIST pour le calcul des propriétés des fluides frigorigènes)

*HFO-1234yf:*

Les données de la courbe température-pression du HFO-1234yf sont mesurées par la méthode statique. La température et pression critique sont mesurées par un calorimètre C80 commercialisé par Setaram. Les densités, à saturation en fonction de la température, sont mesurées par la technologie du densimètre à tube vibrant développer par les laboratoires de l'école des Mines de Paris.

*Coefficient d'interaction binaire du HFC-32 / HFO-1234yf:*

L'équation RK-Soave utilise des coefficients d'interaction binaire pour représenter le comportement des produits en mélanges. Les coefficients sont calculés en fonction des données expérimentales d'équilibre liquide vapeur.

La technique utilisée pour les mesures d'équilibre liquide vapeur est la méthode de cellule statique analytique. La cellule d'équilibre comprend un tube saphir et est équipée de deux échantillonneurs ROLSITM électromagnétiques. Elle est immergée dans un bain cryothermostat (HUBER HS40). Une agitation magnétique à entraînement par champ tournant à vitesse variable est utilisée pour accélérer l'atteinte des équilibres. L'analyse des échantillons est effectuée par chromatographie (HP5890 seriesII) en phase gazeuse utilisant un catharomètre (TCD).

Les mesures d'équilibre liquide vapeur sur le binaire HFC-32 / HFO-1234yf sont réalisées pour les isothermes suivantes : -10°C, 30 °C et 70°C

**Système à compression**

Considérons un système à compression équipé d'un évaporateur et condenseur à contre-courant, d'un compresseur à vis et d'un détendeur.

Le système fonctionne avec 15°C de surchauffe et 5°C de sous refroidissement. L'écart de température minimum entre le fluide secondaire et le fluide frigorigène est considéré de l'ordre de 5°C.

Le rendement isentropique des compresseurs est fonction du taux de compression. Ce rendement est calculé suivant l'équation suivante:

$$\eta_{isen} = a - b(\tau - c)^2 - \frac{d}{\tau - e} \qquad (1)$$

Pour un compresseur à vis, les constantes a, b, c, d et e de l'équation (1) du rendement isentropique sont calculées suivant les données types publiées dans le Handbook "Handbook of air conditioning and refrigeration, page 11.52". Le coefficient de performance (COP) est défini, comme étant la puissance utile fournie par le système sur la puissance apportée ou consommée par le système.

Le coefficient de performance de Lorenz (COPLorenz) est un coefficient de performance de référence. Il est fonction de températures et est utilisé pour comparer les COP des différents fluides.

Le coefficient de performance de Lorenz est défini comme suit:

(Les températures T sont en K)

$$T_{moyenne}^{condenseur} = T_{entrée}^{condenseur} - T_{sortie}^{condenseur} \qquad (2)$$

$$T_{moyenne}^{évaporateur} = T_{sortie}^{évaporateur} - T_{entrée}^{évaporateur} \qquad (3)$$

Le COP de Lorenz dans le cas de l'air conditionnée et réfrigération:

$$COPlorenz = \frac{T_{moyenne}^{évaporateur}}{T_{moyenne}^{condenseur} - T_{moyenne}^{évaporateur}} \qquad (4)$$

Le COP de Lorenz dans le cas de chauffage:

$$COPlorenz = \frac{T_{moyenne}^{condenseur}}{T_{moyenne}^{condenseur} - T_{moyenne}^{évaporateur}} \qquad (5)$$

Pour chaque composition, le coefficient de performance du cycle de Lorenz est calculé en fonction des températures correspondantes.

Le %COP/COPLorenz est le rapport du COP du système par rapport au COP du cycle de Lorenz correspondant.

Résultats mode chauffage

En mode chauffage, le système à compression fonctionne entre une température d'entrée du fluide frigorigène à l'évaporateur de -5°C et une température d'entrée du fluide frigorigène au condenseur de 50°C. Le système fournit de la chaleur à 45°C.

Les performances des compositions selon l'invention dans les conditions de fonctionnement de pompe à chaleur sont données dans le Tableau 1. Les valeurs des constituants (HFO-1234yf, HFC-32) pour chaque composition sont données en pourcentage en poids.

Tableau 1

| | | Temp sortie évap (°C) | Temp sortie comp (°C) | T sortie cond (°C) | évap P (bar) | cond P (bar) | Taux (p/p) | Glide | rendement comp | % COP / COPLorenz |
|---|---|---|---|---|---|---|---|---|---|---|
| R404A | | -5 | 77 | 50 | 5,2 | 23,0 | 4,4 | 0,38 | 79,7 | 57,7 |
| HFO-1234yf | HFC-32 | | | | | | | | | |
| 85 | 15 | 0 | 76 | 43 | 4,0 | 16,5 | 4,1 | 4,84 | 80,6 | 64,7 |
| 84 | 16 | 0 | 77 | 43 | 4,1 | 16,7 | 4,1 | 5,01 | 80,7 | 64,7 |
| 83 | 17 | 0 | 77 | 43 | 4,2 | 17,0 | 4,1 | 5,16 | 80,7 | 64,7 |
| 82 | 18 | 0 | 78 | 43 | 4,2 | 17,2 | 4,1 | 5,29 | 80,8 | 64,7 |
| 81 | 19 | 0 | 78 | 43 | 4,3 | 17,5 | 4,1 | 5,39 | 80,8 | 64,7 |
| 80 | 20 | 0 | 79 | 43 | 4,4 | 17,7 | 4,0 | 5,48 | 80,8 | 64,7 |
| 79 | 21 | 1 | 80 | 43 | 4,5 | 18,0 | 4,0 | 5,54 | 80,9 | 64,7 |
| 78 | 22 | 1 | 80 | 43 | 4,5 | 18,2 | 4,0 | 5,59 | 80,9 | 64,7 |

Résultats mode refroidissement

En mode refroidissement, le système à compression fonctionne entre une température d'entrée du fluide frigorigène à l'évaporateur de -5°C et une température d'entrée du fluide frigorigène au condenseur est de 50°C. Le système fournit du froid à 0°C.

Les performances des compositions selon l'invention dans les conditions de fonctionnement de refroidissement sont données dans le Tableau 2. Les valeurs des constituants (HFO-1234yf, HFC-32) pour chaque composition sont données en pourcentage en poids.

Tableau 2

| | | Temp sortie évap (°C) | Temp sortie comp (°C) | T sortie cond (°C) | évap P (bar) | cond P (bar) | Taux (p/p) | Glide | rendement comp | % COP / COPLorenz |
|---|---|---|---|---|---|---|---|---|---|---|
| R404A | | -5 | 77 | 50 | 5,2 | 23,0 | 4,4 | 0,38 | 79,7 | 47,9 |
| HFO-1234yf | HFC-32 | | | | | | | | | |
| 88 | 12 | -1 | 75 | 44 | 3,7 | 15,7 | 4,2 | 4,20 | 80,3 | 55,9 |
| 87 | 13 | -1 | 75 | 43 | 3,8 | 16,0 | 4,2 | 4,44 | 80,4 | 56,0 |
| 86 | 14 | 0 | 76 | 43 | 3,9 | 16,2 | 4,2 | 4,65 | 80,5 | 56,2 |
| 85 | 15 | 0 | 76 | 43 | 4,0 | 16,5 | 4,1 | 4,84 | 80,6 | 56,3 |
| 84 | 16 | 0 | 77 | 43 | 4,1 | 16,7 | 4,1 | 5,01 | 80,7 | 56,4 |
| 83 | 17 | 0 | 77 | 43 | 4,2 | 17,0 | 4,1 | 5,16 | 80,7 | 56,4 |
| 82 | 18 | 0 | 78 | 43 | 4,2 | 17,2 | 4,1 | 5,29 | 80,8 | 56,5 |
| 81 | 19 | 0 | 78 | 43 | 4,3 | 17,5 | 4,1 | 5,39 | 80,8 | 56,5 |
| 80 | 20 | 0 | 79 | 43 | 4,4 | 17,7 | 4,0 | 5,48 | 80,8 | 56,5 |
| 79 | 21 | 1 | 80 | 43 | 4,5 | 18,0 | 4,0 | 5,54 | 80,9 | 56,6 |
| 78 | 22 | 1 | 80 | 43 | 4,5 | 18,2 | 4,0 | 5,59 | 80,9 | 56,6 |

**Revendications**

1. Utilisation d'une composition binaire du 2,3,3,3-tetrafluoropropène et du difluorométhane, comme fluide de transfert de chaleur, dans des systèmes de réfrigération à compression avec des échangeurs en mode contre-courant ou en mode courant croisé à tendance contre-courant.

2. Utilisation selon la revendication 1 **caractérisé en ce que** la composition contient essentiellement de 70 à 90 % en poids du 2,3,3,3-tetrafluoropropène et de 10 à 30 % en poids du difluorométhane.

3. Utilisation selon la revendication 1 **caractérisée en ce que** la composition contient essentiellement de 78 à 84 % en poids du 2,3,3,3- tetrafluoropropène et de 16 à 22 % en poids du difluorométhane.

4. Utilisation selon la revendication 1 **caractérisée en ce que** la composition contient essentiellement de 81 à 83 % en poids du 2,3,3,3-tetrafluoropropène et de 17 à 19 % en poids du difluorométhane.

5. Utilisation selon l'une quelconque des revendications 1 à 4 **caractérisée en ce que** la composition binaire est mise en œuvre comme fluide de transfert de chaleur pour l'air conditionné et pompe à chaleur.

6. Procédé de transfert de chaleur dans lequel on utilise une composition binaire du 2,3,3,3-tetrafluoropropène et du difluorométhane, comme fluide frigorigène dans des systèmes à compression avec des échangeurs en mode contre-courant ou en mode courant croisé à tendance contre-courant.

7. Procédé selon la revendication 6 **caractérisé en ce que** la composition contient essentiellement de 70 à 90 % en poids du 2,3,3,3- tetrafluoropropène et de 10 à 30 % en poids du difluorométhane.

8. Procédé selon la revendication 6 **caractérisé en ce que** la composition contient essentiellement de 78 à 84 % en poids du 2,3,3,3- tetrafluoropropène et de 16 à 22 % en poids du difluorométhane.

9. Procédé selon l'une quelconque des revendications 6 à 8 **caractérisé en ce que** la compositions binaire est stabilisée.

10. Procédé selon l'une quelconque des revendications 6 à 9 **caractérisé en ce qu'**il est mise en œuvre en présence d'un lubrifiant.

**Patentansprüche**

1. Verwendung einer binären Zusammensetzung von 2,3,3,3-Tetrafluorpropen und Difluormethan als Wärmeübertragungsfluid in Kompressionskälteanlagen mit Austauschern im Gegenstrom-Modus oder im Querstrom-Modus mit Gegenstrom-Tendenz.

2. Verwendung nach Anspruch 1, **dadurch gekennzeichnet, dass** die Zusammensetzung im Wesentlichen 70 bis 90 Gew.-% 2,3,3,3-Tetrafluorpropen und 10 bis 30 Gew.-% Difluormethan enthält.

3. Verwendung nach Anspruch 1, **dadurch gekennzeichnet, dass** die Zusammensetzung im Wesentlichen 78 bis 84 Gew.-% 2,3,3,3-Tetrafluorpropen und 16 bis 22 Gew.-% Difluormethan enthält.

4. Verwendung nach Anspruch 1, **dadurch gekennzeichnet, dass** die Zusammensetzung im Wesentlichen 81 bis 83 Gew.-% 2,3,3,3-Tetrafluorpropen und 17 bis 19 Gew.-% Difluormethan enthält.

5. Verwendung nach einem der Ansprüche 1 bis 4, **dadurch gekennzeichnet, dass** die binäre Zusammensetzung als Wärmeübertragungsfluid für Klimaanlagen und Wärmepumpen verwendet wird.

6. Verfahren zur Übertragung von Wärme, bei dem man eine binäre Zusammensetzung von 2,3,3,3-Tetrafluorpropen und Difluormethan als Kältemittel in Kompressionsanlagen mit Austauschern im Gegenstrom-Modus oder im Querstrom-Modus mit Gegenstrom-Tendenz verwendet.

7. Verfahren nach Anspruch 6, **dadurch gekennzeichnet, dass** die Zusammensetzung im Wesentlichen 70 bis 90 Gew.-% 2,3,3,3-Tetrafluorpropen und 10 bis 30 Gew.-% Difluormethan enthält.

8. Verfahren nach Anspruch 6, **dadurch gekennzeichnet, dass** die Zusammensetzung im Wesentlichen 78 bis 84 Gew.-% 2,3,3,3-Tetrafluorpropen und 16 bis 22 Gew.-% Difluormethan enthält.

9. Verfahren nach einem der Ansprüche 6 bis 8, **dadurch gekennzeichnet, dass** die binäre Zusammensetzung stabilisiert ist.

10. Verfahren nach einem der Ansprüche 6 bis 9, **dadurch gekennzeichnet, dass** es in Gegenwart eines Schmiermittels durchgeführt wird.

**Claims**

1. The use of a binary composition of 2,3,3,3-tetrafluoropropene and difluoromethane as heat transfer fluid in compression-type refrigeration systems with exchangers in countercurrent mode or in crossed-current mode with countercurrent tendency.

2. The use as claimed in claim 1, **characterized in that** the composition contains essentially from 70 to 90 wt.% of 2,3,3,3-tetrafluoropropene and from 10 to 30 wt.% of difluoromethane.

3. The use as claimed in claim 1, **characterized in that** the composition contains essentially from 78 to 84 wt.% of 2,3,3,3-tetrafluoropropene and from 16 to 22 wt.% of difluoromethane.

4. The use as claimed in claim 1, **characterized in that** the composition contains essentially from 81 to 83 wt.% of 2,3,3,3-tetrafluoropropene and from 17 to 19 wt.% of difluoromethane.

5. The use as claimed in any one of claims 1 to 4, **characterized in that** the binary composition is employed as heat transfer fluid for air conditioning and heat pumps.

6.  A method of heat transfer in which a binary composition of 2,3,3,3-tetrafluoropropene and difluoromethane is used as refrigerant in compression systems with exchangers in countercurrent mode or in crossed-current mode with countercurrent tendency.

7.  The method as claimed in claim 6, **characterized in that** the composition contains essentially from 70 to 90 wt.% of 2,3,3,3-tetrafluoropropene and from 10 to 30 wt.% of difluoromethane.

8.  The method as claimed in claim 6, **characterized in that** the composition contains essentially from 78 to 84 wt.% of 2,3,3,3-tetrafluoropropene and from 16 to 22 wt.% of difluoromethane.

9.  The method as claimed in any one of claims 6 to 8, **characterized in that** the binary composition is stabilized.

10. The method as claimed in any one of claims 6 to 9, **characterized in that** it is implemented in the presence of a lubricant.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 4110388 B
- WO 2004037913 A
- WO 2006094303 A
- US 2008314073 A
- FR 2182956
- FR 2256381
- WO 2010002016 A
- WO 2009110228 A
- EP 2149592 A